# EUROPEAN PATENT APPLICATION

(11) **EP 3 876 412 A1**
(43) Date of publication of application: **08.09.2021**
(21) Application number: 21160982.1
(22) Date of filing: 05.03.2021
(51) Int. Cl.: H02M 7/487, H02M 1/32, H02H 7/16, H02H 7/122, H02M 5/458

(54) **CONTROLLER WITH INVERTER FOR REFRIGERATING MACHINES**

(30) Priority: 05.03.2020 CN 202010147289
(71) Applicant: Carel Industries S.p.A., 35020 Brugine (PD) (IT)
(72) Inventor: ZORDAN, Marco, 35020 Brugine PD (IT); LIU, Steven, Suzhou, Jiangsu Province 215151 (CN)
(74) Representative: De Giorgi, Michele

(57) **Abstract**

Described is a controller (100) with inverter for refrigerating machines, comprising a DC bus (10) connected to an inverter device (20) and equipped with a capacitors bank (11) comprising a plurality of levels (15) of capacitors (12), for example electrolytic, in series and designed to provide to the inverter device (20) a bus voltage Vcond having a nominal value of not less than an operating voltage Vdc.

Each of the levels (15) of capacitors (12) has an electrical capacitance suitable to determine a nominal voltage difference Vci.

The capacitors bank (11) being configured in such a way that the sum of the nominal voltage differences Vci of the levels (15) of capacitors (12), subtracted any one of them, is not less than the operating voltage Vdc; the controller (100) being free of an electrical and/or electronic unit configured for interrupting the operation of the controller (100) following a failure and/or short-circuit or malfunction of any one of the capacitors (12).

## Description

### TECHNICAL FIELD

This invention relates to the field of refrigerating machines and the controls and drives of the latter. In particular, the invention relates to a controller with inverter for refrigerating machines, for example with three-phase power supply.

Specifically, a controller according to the invention has a more simple and compact structure than the traditional controllers and is able to withstand a short-circuit test (forming part of the sequence of tests more generally called the "Breakdown of Components" for example such as standards IEC/EN/UL 61800, IEC/EN/UL 60730, IEC/EN/UL 60335) of one of the capacitors, or of one of the capacitors banks, of the DC bus.

### BACKGROUND ART

The use of controllers with inverters is currently known in the filed of refrigerating machines with variable operating regimes.

These controllers have a DC bus having a capacitors bank which comprises at least one pair of capacitors, typically electrolytic, for example 400V, in series.

There is the widespread need that the controllers with inverter for refrigerating machines are able to pass a short-circuit test of a capacitor of the DC bus without the risk that any explosion can cause damage to the surrounding parts and/or trigger a fire.

In order to check this occurrence, the test comprises positioning an inflammable material, such as cotton or tissue paper, at a predetermined distance from the device being tested.

In order to pass the test it is necessary that, if one of the capacitors is short-circuited, there are no effects of fire/flames/sparks/persistent smoke/dripping of material, such as to cause burning of the inflammable material.

In particular, in the specific case of a short-circuit of a capacitor, this determines a greater voltage stress, with respect to those of normal operation, on the capacitor or on the remaining capacitors in series with that on which the fault is induced, applying greater voltages to the components with respect to those relative to the standard conditions (without faults).

Such a voltage stress is the possible cause of electrical stress, even in excess of the limits allowed by the manufacturer of the capacitor which undergoes it. This can cause burning/explosions/fire which obviously does not allow the applicable standards to be satisfied.

A first solution currently known for passing the test comprises encapsulating the capacitors in containment caps, generally made of plastic or metal material.

In that case, any explosion of the capacitor would be contained by the cap.

The effect of ejection of material, if the capacitor is stressed beyond its limits, is typical of electrolytic capacitors.

However, other type of capacitors, when stressed beyond their limits, can determine effects which are equally harmful for the nearby environment. However, this solution has numerous drawbacks.

Firstly, the cap increases the overall size of the controller and it cannot therefore be used for applications which require a compact structure, as is often the case in the HVAC sector.

Moreover, the presence of the cap drastically reduces the thermal dissipation of the heat generated by the capacitor, a fact which often requires the use of a cooling fan.

The application of a metal cap is adopted as an alternative to a cap made of plastic when the latter does not have a mechanical resistance to explosion which is sufficient to prevent the ejection of fragments of the capacitor following explosion of the latter, or where the plastic material does not have a flammability class adequate for the application to which it is intended.

Another traditional solution currently adopted for passing the above-mentioned test is to provide varistors or gas tubes, known in the trade as Gas-discharge tubes (GDT), in parallel with the capacitors and in line with a fuse, for example ceram ic.

In that case, following a short-circuit of one of the capacitors, for example electrolytic, the varistors or GDTs should limit the voltage at the terminals of the capacitor operating until failure of the fuse; this tends to prevent the explosion of capacitor in operation.

However, this solution is structurally complex and not very reliable due to the high tolerance levels of the varistors and GDTs which can be used and the variability of the reaction times of the components with variations to the operational voltage.

Another traditional solution comprises the use of film type capacitors , which typically have electrical ratings greater than those of the other types of capacitors and in particular of the electrolytic ones, the overall dimensions of which are greater for the same capacitance and the performance levels of which are, however, extremely sensitive to the temperature.

Yet another traditional solution comprises the use of a branch known in the trade as crowbar positioned in parallel with the capacitors and providing a short-circuit path in such a way that other protection devices (for example, one or more fuses) intervene, voluntarily, in a controlled manner.

A further traditional solution is described in patent document CN206498188 in which, in the case of a malfunction of the capacitors bank of the DC bus, a safety device identifies the (presumed) fault condition and interrupts the circuit. Except for the solution which comprises the replacement of electrolytic capacitors with film type capacitors, all the traditional solutions currently known determine the interruption of the circuit and therefore the suspension of operation of the controller.

However, the restoration of the circuit requires manual interventions for replacement and/or repair of the device.

### SUMMARY OF THE INVENTION

In this context, the problem forming the basis of the invention is to overcome the above-mentioned test as well as guaranteeing the continuation of operation of the controller.

The purpose of the invention is to provide a controller with inverter which is able to resolve this problem.

In the context of this purpose, an aim of the invention is to provide a controller with inverter which has overall dimensions which are compatible with applications which require a compact structure, especially in the HVAC field of application.

Another aim of the invention is to make a controller which is structurally simple and easy to make with reduced costs.

Studies carried out by the Applicant show that this purpose and these and other aims, which will be described in detail below, are achieved by implementing a controller with inverter for refrigerating machines, especially with a three-phase power supply, which has a capacitors bank of the DC bus having at least one redundant capacitor.

In other words, according to the invention, for a predetermined voltage Vdc of the DC bus, the capacitors bank of the latter will comprise at least n levels of capacitors, installed in series, each having an electrical capacitance to determine a nominal voltage difference Vci with i=1 ... n.

The expression "level of capacitors", or simply "level," means a grouping of one or more capacitors connected together in parallel, and is equivalent to a single capacitor having as the capacitance the sum of those of the single capacitors belonging to the level.

Clearly, each level can consist of a single capacitor, rather than a group of capacitors.

The nominal voltage difference Vci of each level is selected in such a way that the sum of the nominal voltage differences Vci of all the levels of the bank, subtracted any one of them, is not less than Vdc.

This nominal voltage difference depends on the value of the capacitance of the individual capacitors of each level.

In particular, the above-mentioned purpose and aims are achieved by a controller with inverter according to the accompanying independent claim 1. Advantageous aspects of a controller with inverter are described in the attached dependent claims.

Said claims, as filed, are incorporated herein for explicit reference.

### BRIEF DESCRIPTION OF THE DRAWINGS

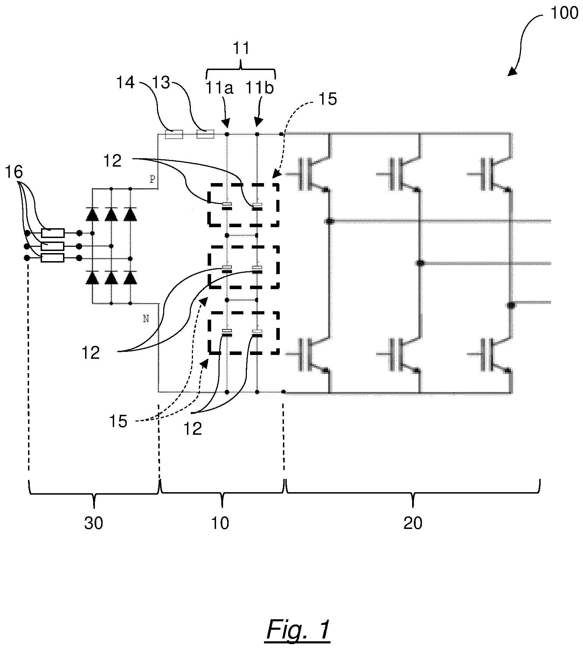

Figure 1 is a simplified circuit diagram of a controller with inverter for refrigerating machines, especially three-phase, according to the invention.

### DETAILED DESCRIPTION

The accompanying drawing shows, by way of a non-limiting example, a controller 100 with inverter for refrigerating machines, for example three-phase, comprising a DC bus 10 and an inverter device 20 to which the DC bus 10 is connected for powering it.

The DC bus 10 is equipped with a capacitors bank 11 comprising a plurality of capacitors 12, preferably electrolytic, arranged to form a series of levels 15, and designed to provide to the inverter device 20 a bus voltage Vcond having a nominal value of not less than an operating voltage Vdc for the inverter device 20.

Each of the levels 15 of capacitors 12 has an electrical capacitance suitable to determine a nominal voltage difference Vci, wherein the index "i" is a number identifying each level 15 and a whole number having a value of between 1 and n.

For example, if the capacitors 12 are all selected with the same capacitance and each level consists of the same number of capacitors, Vci adopts an equal value for all the levels, that is to say, equal to Vcond / n.

According to the invention, the capacitors bank 11 is configured in such a way that the sum of the nominal voltage differences Vci of all the levels 15 of the of the capacitors 12 of the capacitors bank 11, subtracted any one of them, is not less than the operating voltage Vdc.

In other words, the electrical capacitance of the levels 15 of capacitors 12 is selected in such a way that, where a capacitor 12 of one of the levels 15 of the capacitors bank 11, is short-circuited, thereby setting the corresponding Vci to zero, the sum of the electrical capacitances of the remaining n-1 levels 15 of capacitors 12 is not less than the operating voltage Vdc.

The controller 100, according to the invention, is free of an electrical and/or electronic unit configured for interrupting the operation of the controller 100 following failure of any one of the capacitors 12.

The above-mentioned electrical and/or electronic unit can, for example, be:
- a traditional crowbar circuit, that is to say, a circuit designed to provide a controlled short-circuit path, by means of a thyristor, a triac, a trisil, a tyratron or similar devices, the power supply of the device in which it is incorporated;
- a traditional circuit for protection against the malfunctioning of a series of capacitors of a DC bus as described in patent document CN206498188U;
or the like.

In particular, the DC bus 10, of a controller 100 according to the invention may consist of a capacitors bank 11 connected in parallel to the inverter device 20 connected to any inductive filter 13, for example consisting of at least one inductor of the type known as DC choke or DC link choke and/or to any first fuse 14, which can be ceramic, installed in line with the inductive filter.

For example, the DC bus 10 can consist solely of the capacitors bank 11 and the inductive filter 13, for the inverter 20 configured for being powered from the network with a single-phase or three-phase voltage whilst it can consist only of the capacitors bank 11 if the inverter 20 is to be powered from the network with single-phase voltage. The electrical capacitances of the levels 15 of the capacitors 12 can be mutually of equal value, for example each can be configured for determining a predetermined nominal voltage difference, for example up to 400V of nominal voltage for example if the capacitors 12 are electrolytic capacitors.

The capacitors bank 11, in particular, can comprise only 3 levels 15 of capacitors 12, where each level 15 can consist of a single capacitor 12.

In particular, the capacitors bank 11 may be of the tandem type having two branches 11a and 11b in parallel each equipped with only three capacitors 12, as shown by way of a non-limiting example in Figure 1.

The levels 15 and/or the capacitors 12 can be configured for operating with a nominal electrical current having a current intensity of not less than 40A.

In other words, the levels 15 and/or the capacitors 12 can be configured for being charged/discharged by means of a nominal electrical current having a current intensity of not less than 40A.

Preferably, the levels 15 and/or the capacitors 12 are configured for operating with a nominal electrical current having a current intensity of not less than 60A.

As mentioned, the DC bus 10 may comprise at least one first fuse 14 configured to activate in such a way as to interrupt the operation of the controller 100 following the exceeding of a threshold value of an electric current which flows in the first fuse 14, wherein the first fuse 14 is configured to not activate following a short-circuit of any of the capacitors 12 of the capacitors bank 11.

The inverter device 20 can also be connected o the power supply by means of at least a second fuse 16, installed in series with at least one connection terminal to respective phases of the power supply network.

The first fuse 14 and the second fuse 16 can both be present or selectively only one of them can be present, of the controller 100.

Preferably, there will be a second fuse 16 in series with each of the power supply phases of the controller 100.

The second fuses 16 can be configured to activate in such a way as to interrupt the operation of the controller 100 following the exceeding of a threshold value of an electric current which flows in one of the second fuses 16, wherein the second fuses 16 are configured to not activate following a short-circuit of any of the capacitors 12 of the capacitors bank 11.

Clearly, in a traditional manner, the controller 100 can comprise a rectification stage 30 which, by means of the DC bus 10, is connected to the inverter device 20.

It has therefore been shown how a controller 100, according to the invention, allows the above-mentioned short-circuit test of any of its capacitors 12 to be passed a well as guaranteeing the continuation of operation of the controller 100.

In fact, the sum of the nominal voltage differences Vci of the capacitors 12 not in short-circuit is sufficient to guarantee the operation of the controller 100.

Moreover, a controller 100 according to the invention, has overall dimensions compatible with applications which require a compact structure, especially in the HVAC field of application, not requiring the capacitors 12 to be encapsulated, particularly if of the electrolytic type, with caps or replacing the capacitors with film type capacitors which are bulkier and less reliable.

A controller 100, according to the invention, is in particular structurally simple and easy to make with reduced costs.

The invention as it is conceived is susceptible to numerous modifications and variants, all falling within the scope of protection of the appended claims. Further, all the details can be replaced by other technically-equivalent elements. In practice, the materials used, as well as the contingent forms and dimensions, can be varied according to the contingent requirements and the state of the art. Where the constructional characteristics and the technical characteristics mentioned in the following claims are followed by signs or reference numerals, the signs or reference numerals have been used only with the aim of increasing the intelligibility of the claims themselves and, consequently, they do not constitute in any way a limitation to the interpretation of each identified element, purely by way of example, by the signs or reference numerals.

## Claims

1. A controller (100) with inverter for refrigerating machines, comprising a DC bus (10) connected to an inverter device (20) and equipped with a capacitors bank (11) comprising a plurality of capacitors (12) organised to form a series of levels (15) in series, and designed to provide to said inverter device (20) a bus voltage Vcond having a nominal value of not less than an operating voltage Vdc for said inverter device (20); wherein each of said levels (15) of said capacitors (12) has an electrical capacitance suitable to determine a nominal voltage difference Vci; said capacitors bank (11) being configured in such a way that the sum of the electrical capacitances of said levels (15) of said capacitors (12), subtracted any one of them, is not less than the operating voltage Vdc; wherein said controller (100) is free of an electrical and/or electronic unit configured for interrupting the operation of said controller (100) following a failure and/or short-circuit or malfunction of any one of said capacitors (12).

2. The controller (100) according to claim 1, wherein the electrical capacitances of said levels (15) of said capacitors (12) are reciprocally or equal value.

3. The controller (100) according to any one of the previous claims, wherein said capacitors bank (11) comprises only 3 of said levels (15) of said capacitors (12).

4. The controller (100) according to any one of the previous claims, wherein said levels (15) of said capacitors (12) are configured for operating with a nominal electrical current having a current intensity of not less than 40A.

5. The controller (100) according to claim 4, wherein said capacitors (12) are configured for operating with a nominal electrical current having a current intensity of not less than 60A.

6. The controller (100) according to any one of the preceding claims, wherein said DC bus (10) comprises at least one first fuse (14) configured to activate in such a way as to interrupt the operation and/or the power supply of said controller (100) following the exceeding of a threshold value of an electric current which flows in said first fuse (14), wherein said first fuse (14) is configured to not activate following a short-circuit of any of the capacitors (12) of said capacitors bank (11).

7. The controller (100) according to any one of the preceding claims, comprising at least one second fuse 16, placed in series with at least one connection terminal to respective phases of the power supply network; wherein said at least one second fuse (16) is configured for activating in such a way as to interrupt the power supply of said controller (100) following the exceeding of a threshold value of an electric current which flows in at least one of said second fuse (16), said at least one second fuse (16) is configured for not activating following a short-circuit of any of said capacitors (12) of said capacitors bank (11).

8. The controller (100) according to any one of the preceding claims, wherein said controller is configured for being powered by a three-phase or single-phase power supply and/or for providing, by means of said inverter (20), a single-phase of three-phase power supply.
